(19) Europäisches Patentamt
European Patent Office
Office européen des brevets

(11) Publication number: **0 328 528 B1**

(12) # EUROPEAN PATENT SPECIFICATION

(45) Date of publication of patent specification: **24.11.93**

(51) Int. Cl.5: **C08K 5/13**, C08L 67/02

(21) Application number: **87906494.7**

(22) Date of filing: **19.08.87**

(86) International application number:
**PCT/US87/02037**

(87) International publication number:
**WO 88/01285 (25.02.88 88/05)**

(54) **THERMOFORMED POLYESTER ARTICLES.**

(30) Priority: **22.08.86 US 899287**

(43) Date of publication of application:
**23.08.89 Bulletin 89/34**

(45) Publication of the grant of the patent:
**24.11.93 Bulletin 93/47**

(84) Designated Contracting States:
**DE FR GB**

(56) References cited:
**EP-A- 0 090 915**
**DE-A- 1 544 977**
**US-A- 3 238 178**
**US-A- 3 494 886**

(73) Proprietor: **EASTMAN KODAK COMPANY (a New Jersey corporation)**
**343 State Street**
**Rochester New York 14650(US)**

(72) Inventor: **WEAVER, James, C.**
**3922 Skyland Drive**
**Kingsport, TN 37664(US)**
Inventor: **PRUETT, Wayne, P.**
**101 Walton Court**
**Kingsport, TN 37663(US)**
Inventor: **CARICO, Joey, C**
**4103 Country Hills Drive**
**Kingsport, TN 37663(US)**
Inventor: **RAMSEY, Charles, W.**
**Route 4, Wine Circle**
**Blountville, TN 37617(US)**

(74) Representative: **Buff, Michel et al**
**Kodak-Pathé**
**Département des Brevets et Licences CRT**
**Centre de Recherches et de Technologie**
**Zone Industrielle**
**F-71102 Chalon sur Saône Cédex (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 328 528 B1

## Description

### Technical Field

This invention relates to thermoformed, heat-set articles produced from high molecular weight polyesters containing repeating units from terephthalic acid and 1,4-cyclohexanedimethanol. The articles also contain an antioxidant system.

### Background of the Invention

There is presently a need for ovenable food trays capable of withstanding high temperatures. Most conventional home ovens are calibrated to only about ± 10 °C (50 °F), and may reach temperature during use of up to about 232 °C (450 °F). It is desirable that the containers do not lose impact strength, dimensional stability or discolor, so that they may be reused.

Normally, the ovenable containers are thermoformed from a polymeric material. In thermoforming, a sheet of material is preheated to a temperature sufficient to allow the deformation thereof. The sheet is then made to conform to the contours of a mold by such means as vacuum assist, air pressure assist and matched mold assist. Thermoforming is a desirable method of producing thin wall articles.

US PATENT No 3494886 discloses a thermoplastic composition comprising polyester stabilized with substituted phenothiazines.

Also of interest is U.S. Patent No. 4,463,121 which teaches thermoforming thin-walled articles from a composition consisting of polyethylene terephthalate, a polyolefin and optionally, a heat stabilizer such as a hindered phenol.

This patent teaches "higher molecular weights, as measured by increased intrinsic viscosities tend to display greater strength than lower molecular weight polyesters. When working with moderate and high molecular weight polyesters, higher crystallinity is used to increase tensile strength; however, flexural properties then diminish and the polyester becomes stiff and brittle. For any particular use of polyesters, therefore, the particular composition of materials and parameters must be carefully selected".

Applicants have now discovered an article thermoformed from a high molecular weight polyester having high tensile strength, yet having the ability to retain its color when subjected to high oven temperatures. In these articles, it is necessary that the polyester contain repeating units from particular dicarboxylic acid(s) and a particular glycol, and have a high inherent viscosity indicating high molecular weight.

### Disclosure of the Invention

According to the present invention, there is provided a shaped, thin-walled, thermoformed, heatset article, the composition of which comprises:

a) a crystallizable polyester having repeating units from at least 85 mol % terephthalic acid and repeating units from at least 90 mol % 1,4-cyclohexanedimethanol, the total dicarboxylic acid mol % and the total glycol mol % each being 100 mol %, said polyester having an inherent viscosity (I.V.) of about 0.7-1.1, and

b) a heat stabilizing amount of an antioxidant system which comprises a hindered phenol, a phosphite and a thio compound selected from thioethers or thioesters.

Preferably, the Polyesters also contain up to about 15 mol % repeating units from isophthalic acid. Especially preferred are polyesters having repeating units from about 90-99 mol % terephthalic acid and about 10-1 mol % isophthalic acid. The polyester may also be modified with small amounts (less than about 10%) of other conventional dicarboxylic acids and aliphatic or alicyclic glycols. Other dicarboxylic acids which may be used include aliphatic, cycloaliphatic or aromatic acids having 2 to 20 carbon atoms, and aliphatic or cycloaliphatic glycols having 2 to 12 carbon atoms. These polyesters may be produced using conventional polyesterification procedures described, for example, in U.S. Patent Nos. 3,305,604 and 2,901,460. Of course, esters of the acids (e.g., dimethyl terephthalate) may be used in producing the polyesters. It is also very desirable in the present invention for the I.V. of the polyester to be high, i.e., in the range of about 0.87-1.1. Preferably, the high I.V.'s are attained by melt phase polymerization followed by conventional solid state polymerization.

The polyesters described herein for use in producing thermoformed articles have high melting temperatures, but they tend to oxidize at the high temperatures which may be encountered by food trays. Thus, it is necessary to include a heat stabilizing amount of an antioxidant in the thermoforming compositions constituted of a particular blend of a hindered phenol and a thio compound selected from a

thio ether or thio ester and a phosphite. This antioxidant system provides unexpected results when used with the particular polyester described herein. These materials are known, of course, as antioxidants, but the particular combination used by applicants is not believed to be suggested in the art. For example, U.S. Patent 4,463,121 discloses a number of such antioxidants useful in polyethylene terephthalate.

Hindered phenol antioxidants are also commercially available. One suitable hindered phenol is Irganox 1010 antioxidant, marketed by Ciba-Geigy. Its chemical name is tetrakis[methylene-3-(3',5'-di-tert-butyl-4'-hydroxyphenyl)propionate] methane. These hindered phenols have the general formula

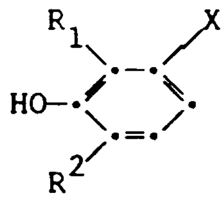

wherein $R_1$ is a branched alkyl group containing 3-20 carbon atoms, $R_2$ is H or a straight or branched alkyl group containing 1 to 20 carbon atoms, and X is an alkyl group or an electron donating group.

Other hindered phenols useful in the present invention include 1,3,5-tris(3,5-di-tert-butyl-4-hydroxybenzyl)-5-triazine-2,4,6-(1H, 3H, 5H)trione; 3,5-di-tert-butyl-4-hydroxyhydrocinnamic acid triester with 1,3,5-tris-(2-hydroxyethyl)-S-triazine-2,4,6-(1H, 3H, 5H)-trione; octadecyl 3,5-di-tert-butyl-4-hydroxyhydrocinnamate; thiodiethylene bis(3,5-di-tert-butyl-4-hydroxy)hydrocinnamate; N,N'-hexamethylene bis(3,5-di-tert-butyl-4-hydroxy-hydrocinnamamide); 1,6-hexamethylene bis(3,5-di-tert-butyl-4-hydroxyhydrocinnamate); 1,3,5-trimethyl-2,4,6,-tris(3,5-di-tert-butyl-4-hydroxybenzyl)benzene; 2,4-bis(n-octylthio)-6-(4-hydroxy-3,5-di-tert-butylanilino)-1,3,5-triazine; n-octadecyl 3,5-di-tert-butyl-4-hydroxyphenylacetate; 1,3,5-tris(4-tert-butyl-3-hydroxy-2,6-dimethylbenzyl)-1,3,5-triazine-2,4,6-(1H, 3H, 5H)trione; 2,2'-methylenebis(4-ethyl-6-tert-butylphenol); 2,2'-methylenebis(4-methyl-6-tert-butylphenol); 4,4'-methylenebis(2,6-di-tert-butylphenol); 4,4'-thioibis(6-tert-butyl-o-cresol); 3:1 condensate of 3-methyl-6-tert-butylphenol and crotonaldehyde; 4,4'-butyldienebis(6-tert-butyl-m-cresol)3,5-di-tert-butyl-4-hydroxybenzyl ether; 2,2'-oxamidobis ethyl-3(3,5-di-tert-butyl-4-hydroxy-phenyl)propionate; stearyl $\beta$-(3,5-di-tert-butyl-4-hydroxyphenyl)propionate; distearyl 3-methyl-4-hydroxy-5-tert-butylbenzyl malonate; 4,4'-propyl-methylenebis(2-tert-butyl-5-methylphenol); 2,2'-propylmethylenebis(4,6-dimethylphenol); 2,2'-methylenebis(4,6'-di-tert-butylphenol); 1,4-bis(3',5'-di-tert-butyl-4'-hydroxybenzyl)-2,3,5,6-tetramethylbenzene; 1,1-bis(3'-cyclohexyl-4'-hydroxyphenyl)cyclohexane; 2,6-bis(2'-hydroxy-3'-tert-butyl-5'-methylphenyl)-4-methylphenol;2,4,6-tris(($\beta$-(3',5'-di-butyl-4'-hydroxyphenyl)ethyl)-1,3,5-triazine; 2,4,6-tris(3',5'-di-tert-butyl-4'-hydroxybenzyl)phenol.

The useful thio ethers and thio esters include esters of thiodipropionic acid, preferably dilauryl thiodipropionate and distearyl thiodipropionate.

The useful phosphite compounds are described as organophosphorus compounds selected from the group consisting of alkyl, aryl and alkyl substituted aryl phosphites and phosphonites, wherein the alkyl and aryl groups contain 6-30 carbon atoms and the alkyl substituted aryl groups containing 7-30 carbon atoms.

The terms "phosphite" and "phosphonite" as used herein are intended to include diphosphite and diphosphonite.

Examples of phosphorus compounds useful in present inventions are: tetra(2'',4''-di-tert-butylphenyl)-diphenyl-4,4'-enediphosphite, diphenyl phosphite, tristearyl phosphite, diphenyl isooctyl phosphite, tris-nonylphenyl phosphite, and bis(2,4-di-t-butylphenyl)pentaerythritol diphosphite and distearyl pentaerythritol diphosphite.

Preferably, the hindered phenol is used in amounts of about 0.05-2% based on the weight of the article. The phosphite and thiodipropionate may each be present in amounts of about 0.05-1.0% based on the weight of the article. These antioxidants may be added to the polyester separately or as a mixture.

The addition of nucleating agents provide faster crystallization during thermoforming and thus provide for faster molding. Conventional nucleating agents such as fine particle size inorganic or organic materials may be used. Suitable nucleating agents include talc, titanium dioxide, calcium carbonate, polymers, etc. Normally, nucleating agents are used in amounts varying from about 0.01% to about 20%, based on the weight of the article.

Other conventional additives such as pigments, dyes, plasticizers, various stabilizers, etc., may be used as desired.

Ordinary thermoforming techniques known to those skilled in the art may be used in producing the articles of this invention. Generally, the technique consists of the following steps:

1. Forming a substantially amorphous sheet from the composition.
2. Preheating the sheet until it softens and positioning it over the mold.
3. Drawing the preheated sheet onto the heated mold surface.
4. Heatsetting the formed sheet by maintaining sheet contact against the heated mold for a sufficient time period to partially crystallize the sheet.
5. Stripping the part out of the mold cavity.

The sheeting and film for use in the thermoforming process can be made by any conventional method. The most common method being by extrusion through a flat die. It is important that the sheet or film be quenched immediately after extrusion in order to minimize the extent of crystallization developed after forming.

The term "substantially amorphous" as used herein shall mean a sheet having a level of crystallinity low enough to enable thermoforming of the sheet to be accomplished with satisfactory mold definition and part formation.

The preheating of the substantially amorphous sheet prior to positioning over the thermoforming mold is necessary in order to achieve the very short molding times required for a viable commercial process. The sheet must be heated above its Tg and below the point at which it sags excessively during positioning over the mold cavity.

This invention can be practiced by using any of the known thermoforming methods including vacuum assist, air assist, mechanical plug assist or matched mold. The mold should be preheated to a temperature sufficient to achieve the degree of crystallinity desired. Selection of optimum mold temperature is dependent upon type of thermoforming equipment, configuration and wall thickness of article being molded and other factors.

Heatsetting is a term describing the process of thermally inducing partial crystallization of a polyester article without appreciable orientation being present. In the practice of this invention, heatsetting is achieved by maintaining intimate contact of the film or sheet with the heated mold surface for a sufficient time to achieve a level of crystallinity which gives adequate physical properties to the finished part. It has been found that desirable levels of crystallinity should be about 10 to about 30 percent.

The heat set part can be stripped out of the mold cavity by known means for removal. One method, blowback, involves breaking the vacuum established between the mold and the formed sheet by the introduction of compressed air. In commercial thermoforming operation the part is subsequently trimmed and the scrap ground and recycled.

The following examples are submitted for a better understanding of this invention. In the examples, the polyester having 95 mol % repeating units from terephthalic acid, 5 mol % repeating units from isophthalic acid and 100 mol % repeating units from 1,4-cyclohexanedimethanol is abbreviated "PCTA".

In the examples shown in the following table, Examples 1-7, PCTA is dry mixed with the additive(s) shown, dried, and extruded into a sheet. The sheet samples are heated in an oven at 232 °C (450 °F) for 90 minutes. The Gardner CDM + b values (a measure of yellowness) show improved color obtained on samples with the addition of the antioxidant(s). The formulations containing the tri-component antioxidant system have significantly better color (e.g., note Example 11).

| Ex. | Formulation | I.V. of Sheeting | Sheeting Thickness (mm) | Oven Temp. | Ageing Time (min) | Color (Gardner CDM + b) |
|---|---|---|---|---|---|---|
| 1 (control) | PCTA Control | 0.79 | 0,69 - 0,71 | 232°C (450°F) | 90 | 24.0 |
| 2 (control) | PCTA + 0.5 wt % Ethanox 330 | 0.79 | 0,66 - 0,69 | 232°C (450°F) | 90 | 21.5 |
| 3 (control) | PCTA + 0.5 wt % Ethanox 330 + 0.25 wt % Weston 619 | 0.78 | 0,58 - 0,64 | 232°C (450°F) | 90 | 17.9 |
| 4 (Invention) | PCTA + 0.5 wt % Ethanox 330 + 0.25 wt % Weston 619 + 0.25 wt % distearyl thiodipropionate | 0.78 | 0,56 - 0,66 | 232°C (450°F) | 90 | 9.7 |
| 5 (control) | PCTA + 0.5 wt % Irganox 1010 | 0.77 | 0,53 - 0,61 | 232°C (450°F) | 90 | 21.0 |
| 6 (control) | PCTA + 0.5 wt % Irganox 1010 + 0.25 wt % Weston 619 | 0.76 | 0,73 - 0,78 | 232°C (450°F) | 90 | 13.1 |
| 7 (Invention) | PCTA + 0.5 wt % Irganox 1010 + 0.25 wt % Weston 619 + 0.25 wt % distearyl thiodipropionate | 0.76 | 0,48 - 0,53 | 232°C (450°F) | 90 | 11.0 |

Whenever the term "inherent viscosity" (I.V.) is used in this application, it will be understood to refer to viscosity determinations made at 25°C using 0.5 gram of polymer per 100 mL of a solvent composed of 60 wt % phenol and 40 wt % tetrachloroethane.

Gardner CDM values are measured on a Gardner color difference meter using ASTM D-2244.

Materials referred to by trademark are described as follows:

Irganox 1010 - tetrakis(methylene-3-(3,5-ditertiary butyl-4-hydroxyphenyl)propionate methane

Ethanox 330 - 1,3,5-trimethyl-2,4,6-tris(3,5-di-t-butyl-4-hydroxybenzyl)benzene

Weston 619 - distearyl pentaerythritol diphosphite

The "melting point" ($T_m$) of the polymers described in this application are readily obtained with a Differental Scanning Calorimeter.

Unless otherwise specified, all parts, percentates, ratios, etc., are by weight.

The invention has been described in detail with particular reference to preferred embodiments thereof, but it will be understood that variations and modifications can be effected within the spirit and scope of the invention.

## Claims

**1.** A shaped, thin-walled, thermoformed, heat-set article from a composition which comprises:

a. a crystallizable polyester having repeating units from about 85-100 mol % terephthalic acid, repeating units from about 15-0 mol % isophthalic acid and repeating units from at least 90 mol % 1,4-cyclohexane-dimethanol, the total dicarboxylic acid mol % and the total glycol mol % each being 100 mol %, said polyester having an inherent viscosity of about 0.7-1.1, and 0.05 to 2 % based on the weight of the article,

b. of an antioxidant system which comprises a hindered phenol, a phosphite and a thio compound selected from thioesters or thioethers.

**2.** The article according to Claim 1 wherein said polyester has an inherent viscosity of about 0.87-1.1.

**3.** The article according to Claim 1 which further comprises about 0.01% to about 20%, based on the total weight of the article, of a nucleating agent.

**4.** The article according to Claim 1 wherein said antioxidant system comprises a hindered phenol of the general formula

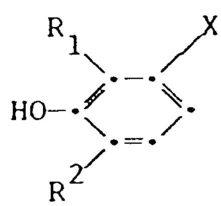

wherein $R_1$ is a branched alkyl group containing 3-20 carbon atoms, $R_2$ is H or a straight or branched alkyl group containing 1 to 20 carbon atoms, and X is an alkyl group or an electron donating group.

**5.** The article according to Claim 4 wherein said antioxidant system comprises

a. a hindered phenol selected from the group consisting of 1,3,5-trimethyl-2,4,6-tris(3,5-di-t-butyl-4-hydroxybenzyl)benzene or tetrakis(methylene-3-(3,5-ditertiary butyl-4-hydroxyphenyl)propionate methane,

b. distearyl pentaerythritol diphosphite and

c. di-Lauryl thiodipropionate or di-stearyl thiodipropionate.

**6.** A shaped, thin-walled, thermoformed, heat-set article according to claim 3 comprising the mixture of:

a. a crystallizable polyester having repeating units from about 90-99 mol % terephthalic acid, repeating units from about 10-1 mol % isophthalic acid and substantially 100 mol % 1,4-cyclohexanedimethanol, the total dicarboxylic acid mol % and the total glycol mol % each being 100 mol %, said polyester having an inherent viscosity of about 0.87-1.1, 0.05 to 2% based on the total weight of the Article

b. of an antioxidant system which comprises

(1) a hindered phenol selected from the group consisting of 1,3,5-trimethyl-2,4,6-tris(3,5-di-t-butyl-4-hydroxybenzyl)benzene or tetrakis(methylene-3-(3,5-ditertiary butyl-4-hydroxyphenyl)-

propionate)methane,
(2) distearyl pentaerythritol diphosphite and
(3) dilauryl thiodipropionate or distearyl thiodipropionate, and
c. 0.01% to 20%, based on the total weight of the article, of a nucleating agent such as $TiO_2$.

**Patentansprüche**

**1.** Dünnwandiger, thermoverformter, heißfixierter Formkörper, aus einer Zusammensetzung, die umfaßt:
a. einen kristallisierbaren Polyester mit wiederkehrenden Einheiten, die zu etwa 85 bis 100 Mol-% aus Terephthalsäure bestehen, sowie zu 15 bis 0 Mol-% aus wiederkehrenden Einheiten der Isophthalsäure sowie wiederkehrenden Einheiten, die zu mindestens 90 Mol-% aus 1,4-Cyclohexandimethanol bestehen, wobei die gesamten Dicarbonsäure-Mol-% und die gesamten Glykol-Mol-% jeweils bei 100 Mol-% liegen, und wobei der Polyester eine Inherent-Viskosität von etwa 0,7-1,1 aufweist, und
b. 0,05 bis 2 %, bezogen auf das Gewicht des Formkörpers, eines Antioxidationssystems, das umfaßt: ein sterisch gehindertes Phenol, ein Phosphit und eine Thioverbindung, ausgewählt aus Thioestern oder Thioethern.

**2.** Formkörper nach Anspruch 1, in dem der Polyester eine Inherent-Viskosität von etwa 0,87-1,1 aufweist.

**3.** Formkörper nach Anspruch 1, der des weiteren enthält: etwa 0,01 % bis etwa 20 %, bezogen auf das Gesamtgewicht des Formkörpers, eines Keimbildners.

**4.** Formkörper nach Anspruch 1, bei dem das Antioxidationsmittelsystem ein sterisch gehindertes Phenol der allgemeinen Formel

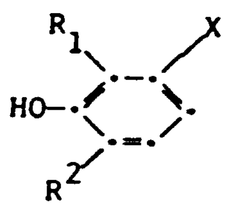

aufweist, worin $R_1$ steht für eine verzweigtkettige Alkylgruppe mit 3 bis 20 Kohlenstoffatomen, $R_2$ steht für H oder eine geradkettige oder verzweigtkettige Alkylgruppe mit 1 bis 20 Kohlenstoffatomen und X steht für eine Alkylgruppe oder eine Elektronen spendende Gruppe.

**5.** Formkörper nach Anspruch 4, in dem das Antioxidationsmittelsystem umfaßt:
a. ein sterisch gehindertes Phenol, ausgewählt aus der Gruppe bestehend aus:
1,3,5-Trimethyl-2,4,6-tris(3,5-di-t-butyl-4-hydroxybenzyl) benzol oder
Tetrakis(methylen-3-(3,5-di-tert.-butyl-4-hydroxyphenyl) propionatmethan,
b. Distearylpentaerythritoldiphosphit und
c. Dilaurylthiodipropionat oder Distearylthiodipropionat.

**6.** Dünnwandiger, thermoverformter, heißfixierter Formkörper nach Anspruch 3 aus einer Mischung aus:
a. einem kristallisierbarem Polyester mit wiederkehrenden Einheiten, die zu etwa 90 bis 99 Mol-% aus Terephthalsäure bestehen, etwa 10 bis 1 Mol-% wiederkehrenden Einheiten aus Isophthalsäure und im wesentlichen 100 Mol-% 1,4-Cyclohexandimethanol, wobei die gesamten Dicarbonsäure-Mol-% und die gesamten Glykol-Mol-% jeweils 100 Mol-% betragen, wobei der Polyester eine Inherent-Viskosität von etwa 0,87-1,1 aufweist und
b. 0,05 bis 2 %, bezogen auf das Gesamtgewicht des Formkörpers, eines Antioxidationsmittelsystems, das umfaßt:
(1) ein sterisch gehindertes Phenol, ausgewählt aus der Gruppe bestehend aus 1,3,5-Trimethyl-2,4,6-tris(3,5-di-t-butyl-4-hydroxybenzyl)benzol oder Tetrakis(methylen-3-(3,5-di-tert.-butyl-4-hydroxyphenyl)propionat)methan,
(2) Distearylpentaerythritoldiphosphit und

(3) Dilaurylthiodipropionat oder Distearylthiodipropionat, und
c. 0,01 % bis 20 %, bezogen auf das Gesamtgewicht des Formkörpers, aus einem Keimbildner, wie z. B. $TiO_2$.

## Revendications

**1.** Article thermoformé à paroi fine obtenu à partir d'une composition qui comprend :
a. un polyester cristallisable constitué de 85 à 100% molaire d'acide téréphtalique, de 15 à 0% molaire d'acide isophtalique et au moins 90% molaire de 1,4-cyclohexanediméthanol, le pourcentage total en acide dicarboxylique et le pourcentage en glycol étant chacun de 100% molaire, le polyester ayant une viscosité inhérente comprise entre 0,7 et 1,1, et
b. 0,05 à 2,0% en poids de l'article, d'un système antioxydant qui comprend un phénol stériquement encombré, un phosphite et un composé soufré choisi parmi les thioéthers et les thioesters.

**2.** Article selon la revendication 1, dans lequel la viscosité inhérente du polyester est comprise entre 0,87 et 1,1.

**3.** Article selon la revendication 1, qui comprend de plus 0,01 à 20% basé sur le poids total de l'article, d'un agent de nucléation.

**4.** Article selon la revendication 1, dans lequel le système antioxydant comprend un phénol stériquement encombré, de formule générale

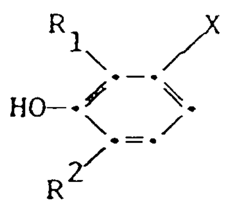

dans laquelle $R^1$ est un groupe alkyle ramifié de 3 à 20 atomes de carbone, R2 est H ou un groupe alkyle linéaire ou ramifié de 1 à 20 atomes de carbone, et X est un groupe alkyle ou un groupe donneur d'électrons.

**5.** Article selon la revendication 4, dans lequel le système antioxydant comprend :
a. un phénol stériquement encombré choisi parmi le groupe suivant :
le 1,3,5-triméthyl-2,4,6-tris(3,5-di-t-butyl-4-hydroxybenzyl)benzène ou le tétrakis(méthylène-3-(3,5-ditertiarybutyl-4-hydroxyphényl)propionate méthane,
b. le distéaryl pentaérythritol disphosphite et,
c. le di-lauryl thiodipropionate ou le di-stéaryl thiodipropionate.

**6.** Article selon la revendication 3 comprenant le mélange suivant :
a. un polyester cristallisable constitué de 90 à 99% molaire d'acide téréphtalique, de 10 à 1% molaire d'acide isophtalique, et environ 100% molaire de 1,4-cyclohexanediméthanol, le pourcentage total en acide dicarboxylique et le pourcentage en glycol étant chacun de 100% molaire, le polyester ayant une viscosité inhérente comprise entre 0,7 et 1,1, et
b. 0,05 à 2,0% en poids de l'article, d'un système antioxydant qui comprend
(1) un phénol stériquement encombré choisi parmi le groupe comprenant : le 1,3,5-triméthyl-2,4,6-tris(3,5-di-t- butyl-4-hydroxybenzyl)benzène ou le tétrakis(méthylène-3-(3,5-di-t butyl-4-hydroxyphényl)propionate)méthane,
(2) le distéaryl pentaérythritol diphosphite, et
(3) le dilauryl thiodipropionate ou le distéaryl thiodipropionate, et
c. 0,01 à 20% en poids, basé sur le poids total de l'article, d'un agent de nucléation tel que $TiO_2$.